(19) Europäisches Patentamt
European Patent Office
Office européen des brevets

(11) EP 4 261 779 A1

(12) **EUROPEAN PATENT APPLICATION**

(43) Date of publication:
18.10.2023 Bulletin 2023/42

(21) Application number: 22167734.7

(22) Date of filing: 12.04.2022

(51) International Patent Classification (IPC):
*G06T 7/33* (2017.01)

(52) Cooperative Patent Classification (CPC):
**G06T 7/33;** G06T 2200/32; G06T 2207/20044;
G06T 2207/20081; G06T 2207/20084;
G06T 2207/30041; G06T 2207/30101;
G06T 2207/30172

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: eye2you GmbH
72070 Tübingen (DE)

(72) Inventors:
• BROWATZKI, Björn
72070 Tübingen (DE)
• LIES, Jörn-Philipp
72070 Tübingen (DE)
• WALLRAVEN, Christian
72070 Tübingen (DE)

(74) Representative: Schiweck Weinzierl Koch
Patentanwälte Partnerschaft mbB
Ganghoferstraße 68 B
80339 München (DE)

(54) **COMPUTER-IMPLEMENTED METHOD FOR TRAINING AT LEAST ONE NEURAL NETWORK AND COMPUTER-IMPLEMENTED METHOD AND DEVICE FOR IMAGE STITCHING USING THAT NETWORK**

(57) The invention relates to a computer-implemented method and device for image stitching a set of digital images illustrating overlapping portions of a scene into a widefield image of the scene using at least one fully convolutional neural network that provides a semantic feature map at an output layer for a digital image provided at the input layer of the neural network. Furthermore, the invention relates to a computer-implemented method for training a neural network for obtaining a semantic feature map for a digital image. The invention thus provides an improved computer-implemented method and device for image stitching which provide widefield images from digital sector images having a varying quality.

Figure 3

Fig. 3a

EP 4 261 779 A1

**Description**

The present invention relates to a computer-implemented method for training at least one neural network and computer-implemented method and device for image stitching using that network.

Image stitching methods may be used to generate a widefield image of a scene from a set of sector images of that scene. This is particularly used, if the detector, e. g. a camera, has a field-of-view being too small to cover the whole scene. Then, a set of sector images is recorded with the detector. Each sector image covers a part of that scene. Furthermore, the sector images overlap. The image stitching method analyzes the sector images and combines sector images to a widefield image.

However, the recorded sector images usually comprise recording-related artefacts that may be caused by e. g. out-of-focus recording, as well as light reflexes from objects close to the detector or insufficient covering of the scene. In addition, the acquisition of several sector images may often result in the recording of non-matching sectors. Therefore, the sector images can have a different image quality. Furthermore, the image can comprise a quality variation within each image.

Common computer-implemented image stitching methods require sector images having many high-frequency structures, a low difference of the image quality between the sector images. A set of sector images having a varying quality may cause the need to manually tune the parameters of those computer-implemented image stitching methods for a successful combination of the set sector images into a widefield image. Otherwise only a decreased number of sector images may be successfully integrated into the resulting widefield image.

Thus, there is a need to provide an improved computer-implemented method and device for image stitching which provides widefield images from sector images having a varying quality.

The object of the present invention is solved by the subject-matter of the independent claims. Further embodiments are incorporated in the dependent claims and the following description.

According to the present invention, a computer-implemented method for training at least one neural network is provided, the at least one neural network having an input layer and an output layer for obtaining a semantic feature map at the output layer for a digital image provided at the input layer, the semantic feature map comprising a semantic feature vector for each image point of the corresponding digital image at the input layer, the semantic feature vector particularly providing likelihood information of the presence of a blood vessel, a macula and/or an optic nerve papilla at the corresponding image point, the method comprising at least the following steps: Providing at least one pair of digital training images illustrating overlapping portions of a training scene at the input layer, wherein a ground truth transformation Q projects a first digital training image of the pair of digital training images onto a second digital training image of the pair of digital training images, the training scene particularly illustrating a retina of an eye; Obtaining at least one semantic feature map at the output layer for each digital training image of the pair of digital training images at the input layer; Determining a segmentation loss between at least one semantic feature map and at least one ground truth segmentation of the training scene, the at least one ground truth segmentation particularly comprising semantic feature information of the training scene; Transforming at least one semantic feature map corresponding to the first digital training image of the at least one pair of digital training images using the ground truth transformation Q; Determining a contrastive image loss between the transformed first semantic feature map and the semantic feature map corresponding to the second digital training image; Adapting the at least one neural network based on the determined segmentation loss and the contrastive image loss; and Repeating above steps until the determined segmentation loss and the contrastive image loss fulfill a predetermined condition; wherein the neural network is a fully convolutional neural network.

The computer-implemented method trains a fully convolutional neural network, FCN, to provide a semantic feature map for a digital image. The FCN provides the semantic feature map at the output layer, wherein the digital image is provided to the input layer of the FCN. The output semantic feature map comprises a matrix of semantic feature vectors, said matrix having the same number of lines and columns as the matrix of image points of the provided digital image. The image points may for example be pixels or voxels. Thus, the computer-implemented method trains an FCN that provides semantic features vectors in a 1:1 correspondence to the image points at the output layer. A semantic feature vector comprises at least one information about semantic features at the image point. The information may be stored in an information channel of the semantic feature vector. In an example, that information may provide the likelihood of the presence of a semantic feature particularly of blood vessels, a macula and/or an optic nerve papilla etc. The semantic feature vector may comprise a plurality of information channels for the corresponding image point.

The computer-implemented method for training at least one neural network uses at least one pair of digital training images that are provided at the input layer of the FCN. A digital training image is a digital image, particularly a digital sector image of a scene, that is used to train the FCN. The pair of digital training images are overlapping sector images of a training scene, e. g. a fully imaged retina. For example, a sector of the training scene may be chosen to provide the first digital training image of the pair. The second digital training image may for example be provided by shifting the sector in the training image. The shifted sector still overlaps with the original sector. The shifting may be a ground truth transformation Q projecting the first digital training image to the second digital training image. Therefore, the ground truth transformation Q is known. Furthermore, the first digital training image and the second digital training image may comprise the same number of image points and may have the same shape.

The at least one ground truth segmentation of the training scene is predetermined. That ground truth segmentation may comprise semantic information about the training scene. The ground truth may for example be provided for at least the section of the training scene being covered by the second digital training image. If the training scene is a retina, the semantic information may for example comprise information about the position of blood vessels, the macula, and/or the optic nerve papilla etc. The semantic information may be stored in different channels of the ground truth segmentation. For example, a user may generate the ground truth segmentation.

The FCN provides a semantic feature map at the output layer for each digital training image at the input layer. If a single pair of digital training images is provided, the FCN provides two semantic feature maps.

The computer-implemented method for training at least one neural network determines a segmentation loss between at least one of the semantic feature maps and the ground truth segmentation. It is preferred that the segmentation loss is determined for all semantic feature maps.

Furthermore, a contrastive image loss between the semantic feature maps of a pair of digital training images is determined. Before the determination of the contrastive image loss, the ground truth transformation Q is applied to the semantic feature map of the first digital training image to shift that semantic feature map in the same manner as the second digital training image. Hence, the overlapping portions of the training scene in the transformed semantic feature map of the first digital training image have corresponding image coordinates as overlapping portions of the training scene in the semantic feature map of the second digital training image. The contrastive image loss is determined between the transformed semantic feature map of the first digital training image and the semantic feature map of the second digital training image.

The training of the FCN is performed by using the segmentation loss and the contrastive image loss. This may for example mean, that the FCN is adapted based on the result of the segmentation loss and the contrastive image loss. The steps of the computer-implemented method are repeated with the adapted FCN until the segmentation loss and the contrastive image loss fulfill a predetermined condition. The predetermined condition may for example be comprise predetermined threshold value for the segmentation loss and the contrastive image loss. Hence the segmentation loss and the contrastive image loss shall for example converge towards that threshold value.

The FCN, particularly the trained FCN, provides an accurate semantic feature map at the output layer of a corresponding digital image at the input layer. Semantic features in the digital image are independent of the quality of the provided digital image. Furthermore, semantic features are independent of the quality between different digital images illustrating corresponding portions of a scene.

Hence, the invention provides a method for training at least one neural network, the neural network providing accurate semantic feature maps having a semantic feature vector for each image point of a provided digital image. Those accurate semantic feature maps may be used in a computer-implemented method for image stitching to provide widefield images from digital sector images having a varying quality between those digital sector images and within those digital sector images.

In an example, the at least one semantic feature vector may comprise a first sub-vector and a second sub-vector, the first sub-vector comprising at least one single-channel segmentation map, the at least one single-channel segmentation map indicating the likelihood of the presence of a semantic feature being provided in the at least one ground truth segmentation, the semantic feature particularly being at least one of the group: a blood vessel, a macula and/or an optic nerve papilla, wherein the second sub-vector comprises further implicit information for the corresponding image point, wherein in the step of determining a segmentation loss, the segmentation loss between the first sub-vector and the at least one ground truth segmentation is determined.

The single-channel segmentation map may comprise a single likelihood value for the presence of a semantic feature at the corresponding image point, e. g. an anatomical feature of the retina. The anatomical feature may for example be a blood vessel, a macula, or an optic nerve papilla. If the first sub-vector comprises more than one single-channel segmentation maps, each single-channel segmentation map comprises the likelihood value for the presence of a different semantic feature. The first sub-vector comprises information that may be compared with the information stored in the ground truth segmentation. Thus, the determination of the segmentation loss provides a control of the development of the first sub-vector in the training process of the neural network. The second sub-vector comprises further implicit information for the corresponding image point. That information is not compared with further information such that the training of the neural network freely adapts the output information in the second sub-vector.

In a further example, the step of determining a segmentation loss may comprise the at least the following sub-steps: Determining a direct segmentation loss between the at least one semantic feature map and the at least one ground truth segmentation; Determining an indirect segmentation loss between the at least one ground truth segmentation and at least one semantic feature map corresponding to the first digital training image of the at least one pair of digital training images by using the ground truth transformation, Q; and Determining the segmentation loss from the direct segmentation loss and indirect segmentation loss.

In that example, the direct segmentation loss is the difference between the direct output of the neural network, i.e., the semantic feature maps, and the ground truth segmentation. The determination of the direct segmentation loss may comprise minimizing the binary cross entropy between the ground truth segmentation of a specific image point and the output of the neural network for that image point.

In that example, the indirect segmentation loss is the difference between the transformed semantic feature map and the ground truth information or vice versa.

Furthermore, for example, in the step of determining the segmentation loss from the direct segmentation loss and the indirect segmentation loss, the direct segmentation loss and the indirect segmentation loss may be summed. The direct segmentation loss and/or the indirect segmentation loss may be weighted in the sum.

According to another example, in the step of determining a contrastive image loss, a distance, preferably a Euclidian distance, of at least the semantic feature vectors of the pair of digital training images may be minimized, wherein said semantic feature vectors represent the same position in the training scene.

That example uses those semantic feature vectors corresponding to the same position of the training scene have the same position in the corresponding semantic feature map. The distance between those semantic feature vectors of the pair of digital training images is minimized. The distance may for example be the difference between those semantic feature vectors or the Euclidian distance between those semantic feature vectors in the training scene.

In an example, the neural network may comprise an encoder and a decoder, the encoder being configured to downscale a size of a digital image at the input layer to a downscaled digital image, wherein the decoder is configured to upscale the downscaled digital image to a semantic feature map having the size and to provide the semantic feature map at the output layer.

The encoder may comprise a plurality of convolutional layers for downsampling operations to downscale a digital image provided at the input layer. For example, the encoder may downscale the digital image into a spatially smaller but wider representation hidden in the neural network. The decoder may comprise a plurality of convolutional layers that provide repeated upsampling operations. Those upsampling operations may for example comprise deconvolutions and/or pixel shuffle operators.

According to an example, the neural network may provide a digital image of a semantic feature map. The digital image of the semantic feature map may have the same size as the digital training image at the input layer, i.e., the same number of matrix elements is the same as the number of image points. Furthermore, also the number of rows and columns of the matrix of the semantic feature map may be the same as the number of rows and columns of the digital training image.

According to the present invention, also a computer-implemented method for image stitching a set of digital images is provided, the set of digital images illustrating overlapping portions of a scene into a widefield image of the scene using at least one neural network with an input layer and an output layer, the scene in particular illustrating a retina of an eye, each digital image comprising a plurality of image points, the method comprising at least the following steps: Obtaining at least one semantic feature map at the output layer for at least one digital image of the set of digital images at the input layer, the semantic feature map comprising a semantic feature vector for at least one image point of the corresponding digital image at the input layer, the semantic feature vector particularly providing likelihood information of the presence of a blood vessel, a macula and/or an optic nerve papilla at the corresponding image point; Registering the digital images of the set of digital images using the obtained at least one semantic feature map; Blending the plurality of registered digital images of the set of digital images into a widefield image of the scene, wherein the neural network is a fully convolutional neural network and wherein at least one semantic feature vector encodes at least one semantic information and information about a spatial position in the scene.

The method for image stitching a set of digital images uses an FCN to extract semantic feature information from digital images provided at the input layer of the FCN. At least one digital image of the provided set of digital images is provided at the input layer to obtain a semantic feature map for said digital image. Said semantic feature map is used in the registration of the digital images of the set to register said digital image. The further digital images of the set may be registered using alternative methods. However, it is preferred that each digital image of the set is provided at the input layer of the FCN to obtain semantic feature maps for each digital image of the set. Each semantic feature map comprises at least one semantic feature vector for at least one image point of a digital image of the set. Then, the registration of the digital images is carried out using those semantic feature maps. At least at the spatial position in the scene corresponding to the position of the at least one semantic feature vector of the at least one image point in the at least one digital image, the registration is independent from the quality of the at least one digital image. Consequently, in the blending step, due to the improved registration the method of image stitching a set of digital images successfully integrates an increased number of digital images of the set into the widefield image. The widefield image of the scene provided by the method of image stitching a set of digital images may be wider and may comprise less artifacts from the blending step.

According to an example, the neural network may have been trained with a computer-implemented method for training at least one neural network described above.

The use of the neural network being trained by the method for training at least one neural network described above further improves the accuracy of the semantic feature maps. Thus, the registration is improved further. That results to an improvement of the resulting widefield image of the scene.

In an example, between the steps of obtaining at least one semantic feature map and registering the digital images of the set of digital images, the method may further comprise the steps: Determining a set of keypoints from the at least one semantic feature map; and Determining a descriptor vector for at least one keypoint; wherein in the step of registering the plurality of digital images, the keypoints and the descriptor vectors are used to identify image points in the different digital images representing the same spatial position in the scene.

For example, if the semantic feature vector comprises an information channel for blood vessels, keypoints may be assigned to each position in the semantic feature map where the semantic feature vector indicates the presence of a blood vessel. The descriptor vector may be determined at the image point position of the keypoint. The determination of the descriptor vector may be based on the neighborhood of the keypoint, wherein the neighborhood may be the image points around the position of the keypoint.

Furthermore, between the step of registering the plurality of digital images and blending the plurality of registered digital images, the method may for example further comprise the step: Determining a set of transformation parameters from the keypoints and the descriptor vectors to align at least one digital image into a single coordinate space; and Transforming the at least one digital image and the corresponding at least one semantic feature map with the set of transformation parameters; wherein the transformed digital images are the plurality of registered digital images.

For example, if the scene illustrates a curved surface particularly the retina of an eye, the flat coordinate space of a registered digital image may be transformed to a curved coordinate space using the set of transformation parameters. The transformation may also be called warping. Transforming the registered digital images to the single coordinate space increases the accuracy of the blending step. Thus, the quality of the widefield image may improve.

In the step of blending the plurality of registered digital images, the registered digital images may for example be merged using a weighted average of at least one registered digital image with a linearly decreasing weight from a center of the at least one registered digital image.

The weighted averaging of the at least one registered digital image improves the quality of the widefield image further. Due to the averaging visible edges on borders of the integrated registered digital images are reduced, preferably avoided.

According to the present invention, also a method for diagnosing an eye illness, particularly an eye illness of the retina, is provided using the computer-implemented method for image stitching a set of digital images described above.

Specifically, said method for diagnosing an eye illness, particularly an eye illness of the retina comprises image stitching a set of digital images as described above and analyzing said stitched digital images whether or not they show abnormalities of the eye in comparison to a healthy eye, particularly abnormalities of the retina in comparison to the retina of a healthy eye, thereby diagnosing an eye illness, particularly an illness of the retina.

A "healthy eye" is an eye of a subject which is known not to suffer from an eye illness.

A "retina of a healthy eye" is a retina which is known not to suffer from an illness of the retina. If an eye or a retina shows an abnormality in comparison to a healthy eye or a healthy retina, such an abnormality may be indicative that said eye or retina suffers from an illness or may be at a risk of suffering from an illness, e.g. eye illness or illness of the retina.

It is apparent that the method for diagnosing an eye illness is carried out in vitro or ex vivo. Indeed, the diagnosis is carried out on digital images obtained from the eye(s) of a subject and stitched in accordance with the methods of the present invention.

As such, the diagnosis is non-invasive. Digital images are preferably processed, i.e., stitched in accordance with the methods of the present invention.

The subject may be a human, chimpanzee, dog, cat, cattle, swine, horse, sheep, goat, rat or mouse, with human being preferred.

The eye illness may preferably be an illness of the retina. An illness of the retina may be glaucoma, retinal tear, retinal detachment, retinal artery occlusion, diabetic retinopathy, epiretinal membrane, macular hole, macular pucker, macular degeneration, macular edema, uveitis, retinopathy, retinoblastoma, infectious retinitis or retinitis pigmentosa.

Diagnosis may be accomplished by analyzing digital images of an eye using the computer-implemented method for image stitching a set of digital images described above. For example, diagnosis may be carried out by comparing digital images of a healthy eye with digital images of an eye suspected to suffer or which is already suffering from an eye illness, preferably an illness of the retina. Such comparing may be aided by computers.

According to the present invention, also a use of the computer-implemented method for image stitching a set of digital images described above is provided for diagnosing an eye illness, particularly an eye illness of the retina.

Specifically, said use for diagnosing an eye illness, particularly an eye illness of the retina comprises image stitching a set of digital images as described above and analyzing said stitched images whether or not they show abnormalities of the eye in comparison to a healthy eye, particularly abnormalities of the retina in comparison to the retina of a healthy eye, thereby diagnosing an eye illness, particularly an eye illness of the retina.

The computer-implemented method for image stitching for diagnosing an eye illness may for example be used in smartphone-based set imaging (SBFI) for retinal screenings. This imaging method uses the camera of a smartphone to take several digital images of the retina of an eye. The digital images may be acquired in non-mydriatic conditions, i.e., without pupil dilation. Alternatively, acquisition may be performed with pupil dilation. Due to the restrictions of the field-of-view of smartphone cameras, each digital image only records a sector of the retina of the eye. Those pictures form the set or set of digital images.

Furthermore, the computer-implemented method for image stitching described above may be run on the smartphone. Hence, the combination of the set of digital images to a widefield image of the retina of the eye may be performed on the smartphone. Feedback for the retinal screening is available very soon after image acquisition.

The use of the computer-implemented method for image stitching for diagnosing an eye illness further allows for large-scale pre-screening programs as well as screenings in hard-to-access areas. Large, costly, and stationary devices for retinal screenings are not required anymore.

Thus, the invention reduces the costs and simplifies the implementation of such screening programs due to the use of common smartphones.

According to the present invention, also a computer program product being configured to carry out at least one of the computer-implemented methods described above is provided.

Advantages and effects as well as further developments of the computer program product result from the advantages and effects as well as further developments of the method described above. In this respect, it is referred to the preceding description. A computer program product may be understood, for example, a data carrier on which a computer program element is stored, the computer program element comprising instructions executable by a computer. Alternatively, or additionally, a computer program product may be understood to include, for example, a transitory or non-transitory data storage device, such as flash memory or random-access memory, comprising the computer program element. However, this is not to exclude other types of data storage comprising the computer program element.

According to the present invention, also a device or system being configured to carry out at least one of the computer-implemented method described above is provided.

The device or system may for example be a personal computer or a laptop. Concerning the computer-implemented method for image stitching mentioned above, the device or system may for example also be a smartphone having a camera and suitable hardware to implement the computer-implemented method for image stitching.

The effects and further embodiments of the device or system according to the present invention are analogous to the effects and embodiments of the description mentioned above. Thus, it is referred to the above description of the computer-implemented method for training at least one neural network and the computer-implemented method for image stitching a set of digital images.

In the following the invention is described by the means of an exemplary embodiment using the attached drawing.

Fig. 1 shows a flow chart of the method for image stitching a set of digital images.

Fig. 2 shows a schematic diagram of the architecture of an encoder-decoder neural network.

Fig. 3a-c shows a result of keypoint matching in a pair of digital training images.

Fig. 4 shows a result of prior art keypoint matching in the pair of digital training images of Fig. 7a.

Fig. 5a-f shows a schematic diagram of steps of blending registered digital images to a widefield image.

Fig. 6a-c shows a set of digital images of a retina (a) being blended with a prior art method (b) and the method for image stitching according to the present invention (c).

Fig. 7 shows a schematic diagram showing the method for training at least one neural network.

Fig. 8 shows a schematic diagram of creating a pair of digital training images by determining ground truth transformation.

Fig. 9 shows a schematic diagram of creating a pair of digital training images in a different manner than shown in fig. 8.

Fig. 10 shows a schematic diagram of determining a distance between semantic feature vectors of different digital training images.

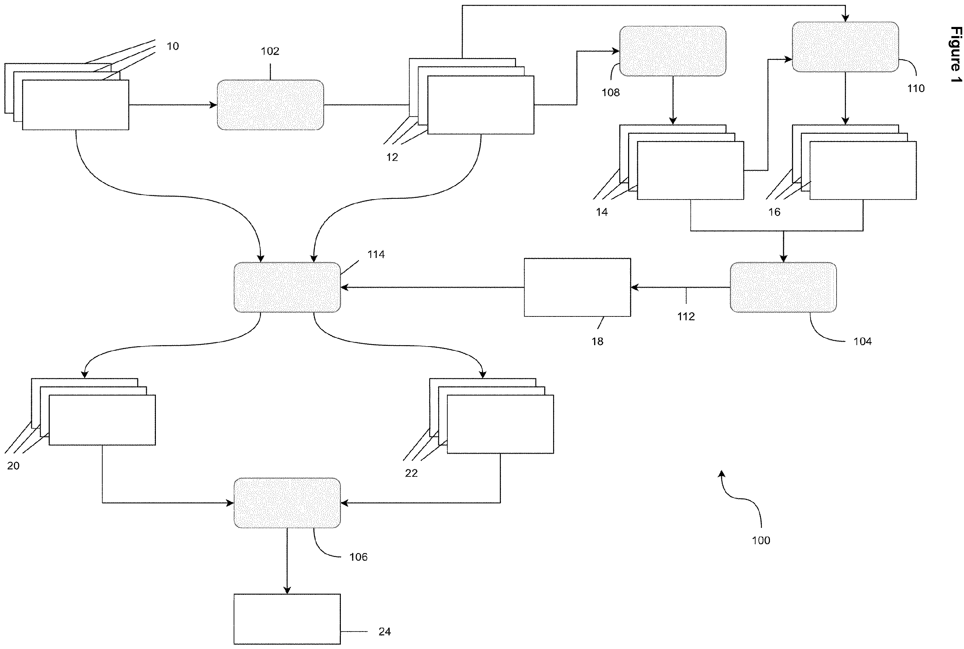

Fig. 1 shows an overview of the method 100 for image stitching a set of digital images 10 of a scene into a widefield image 24 of the scene, wherein the set of digital images 10 illustrates overlapping portions of a scene. In this example, the scene shows the retina of an eye. However, the scene may show any physical or digital object. The method 100 combines at least a sub-set of the digital images 10 to the widefield image 24 of the scene.

Each digital image 10 comprises a plurality of image points. The image points may be arranged in a matrix and may for example be pixels or voxels. In case of pixels, the matrix may have a specific number of rows and columns.

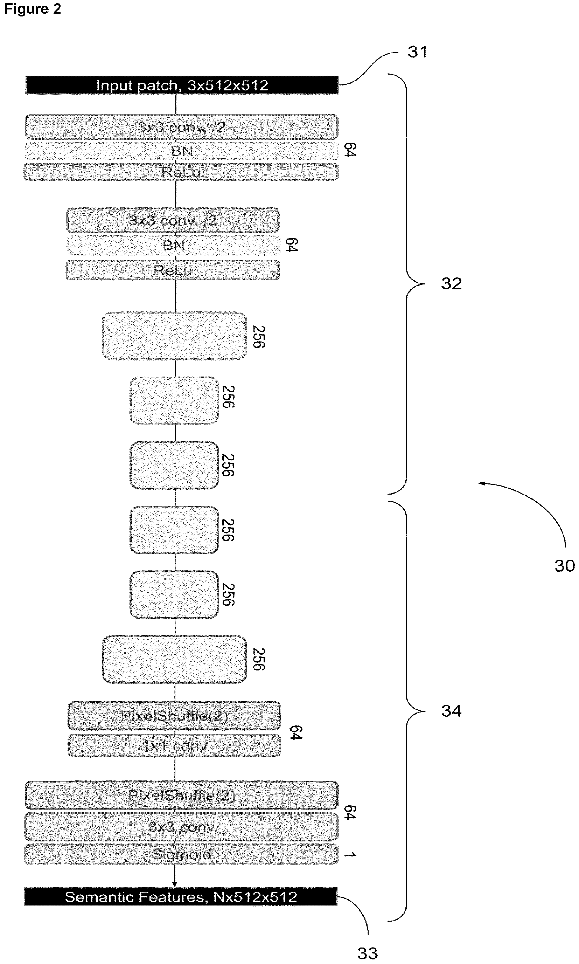

In a first step 102, at least one digital image 10 of the set is provided to a fully convolutional neural network 30, FCN. The FCN 30 is shown in fig. 2. It comprises an encoder 32 with an input layer 31. Furthermore, the FCN 30 comprises a decoder 34 with an output layer 33. The at least one digital image 10 is provided to the input layer 31. In this example, the at least one digital image may comprise a matrix of image point with 512 x 512 pixels and three color channels.

The encoder 32 downscales the at least one digital image 10 at the input layer 31 with a cascade of convolutional layers into a representation that is hiding inside the FCN 30. Those layers provide a decreasing number of matrix elements in the matrix but an increasing number of channels per matrix element. The number of channels is indicated at each convolutional layer.

The decoder 34 comprises a cascade of convolutional layers that upscale the hidden representation. Those convolutional layers may for example comprise upsampling operations and/or pixel shuffle operators. The different convolutional layers provide an increasing number of matrix elements with a decreasing number of channels per matrix element. The number of channels is indicated at each convolutional layer.

The FCN 30 extracts semantic feature information from the at least one digital image 10. The semantic feature information may for example be a likelihood for the presence of an object in the scene. The object may for example be a blood vessel, a macula, an optic nerve papilla or anything else being arranged in the scene.

At the output layer 33 The FCN 30 provides a semantic feature map 12 for the at least one digital image 10. If more than one digital image 10 is provided, the FCN provides a semantic feature map 12 for each provided digital image 10.

The semantic feature map 12 comprises a matrix of semantic feature vectors. A semantic feature vector comprises at least one information channel for semantic information. Each information channel may indicate another semantic information. The matrix of the semantic feature map 12 may have the same number of rows and columns as the provided at least one digital image 10. This means each matrix element of the matrix of the semantic feature map 12 corresponds to an image point of the provided digital image 10.

The semantic feature vector may comprise any number of information channels. In the present example, the at least one semantic feature vector comprises six information channels may indicate the likelihood of the presence of semantic feature information, e. g. anatomical features. The information channels of the sub-set may also be called segmentation channels.

The information channels outside that sub-set may encode implicit information which is not necessarily related to the likelihoods of the segmentation channels. The implicit information may be additional information of the corresponding image point.

The invention does not necessarily require that each matrix element comprises a semantic feature vector. For example, one semantic feature vector may be assigned to several image points. However, in the preferred embodiment, each matrix element comprises a semantic feature vector such that the semantic feature vectors and the image points are assigned to each other in a 1:1 correspondence.

The semantic feature map 14 may be provided as a digital semantic image, wherein the highest likelihood information of each matrix element of the semantic feature map is shown. If the semantic feature vectors comprise sub-vectors, each sub-vector may be shown as digital semantic image.

In optional step 108 shown in fig. 1, a set of keypoints 14 is determined from the at least one semantic feature map 12. The keypoints 14 for a semantic feature map 12 are determined to matrix elements of the matrix using the segmentation channel of that semantic feature map 12. Thus, the keypoints 14 may be transferred to the information channels relating to implicit information of the semantic feature map 12. Since the matrix elements of the semantic feature map 12 correspond to the image points of the corresponding digital image 10, the keypoints 14 may be transferred to the corresponding digital image 10.

In the present example, keypoints 14 are determined for a segmentation channel providing likelihood information about the presence of a blood vessel on the corresponding image point. A vessel skeleton with a constant line thickness of 1 pixel may be created using the corresponding segmentation channel. This may be performed with a center line extraction method being a thinning algorithm.

All matrix elements of the matrix of the vessel skeleton may be regarded as keypoints 14.

In further optional step 110 a descriptor vector 16 may be determined for at least one keypoint 14. The determination of the descriptor vector 16 may be based on the neighborhood of the keypoint 14. In an example, the neighborhood may only comprise the image points abutting the keypoint position. In another example, a window of a predetermined window size may define the neighborhood of the keypoint 14.

All information channels of the neighborhood may be averaged for the determination of the descriptor vector. The averaging may be performed by providing an image pyramid with for example three scales. Each pyramid level comprises a downscaled semantic feature map 12 by a factor of 2. On each pyramid level, a window of the neighborhood of the respective keypoint 14 is extracted. With a number of information channels of k and three scales, the resulting descriptor vector contains i = k + 2k + 4k dimensions and the window size is 3k. For example, if the image has a size of 512 x 512 pixels, the window size of the first scale may be in the range of 3 to 30 pixels, preferably in the range of 6 to 14 pixels, most preferably 9 pixels. With a window size of 9 pixels in the first scale, the window size in the second and third scale would be 17 and 33, respectively.

For example, the descriptor vector 16 of a keypoint 14 may comprise information about the position of the keypoint 14 on the semantic feature, e. g. a blood vessel.

The keypoints and their descriptor vectors may be used in step 104 of registering the digital images 10 of the set of digital images 10. For the registration, image points in the digital images 10 to be registered referring to the same spatial position in the scene are identified using the keypoints 14 and the descriptor vectors 16.

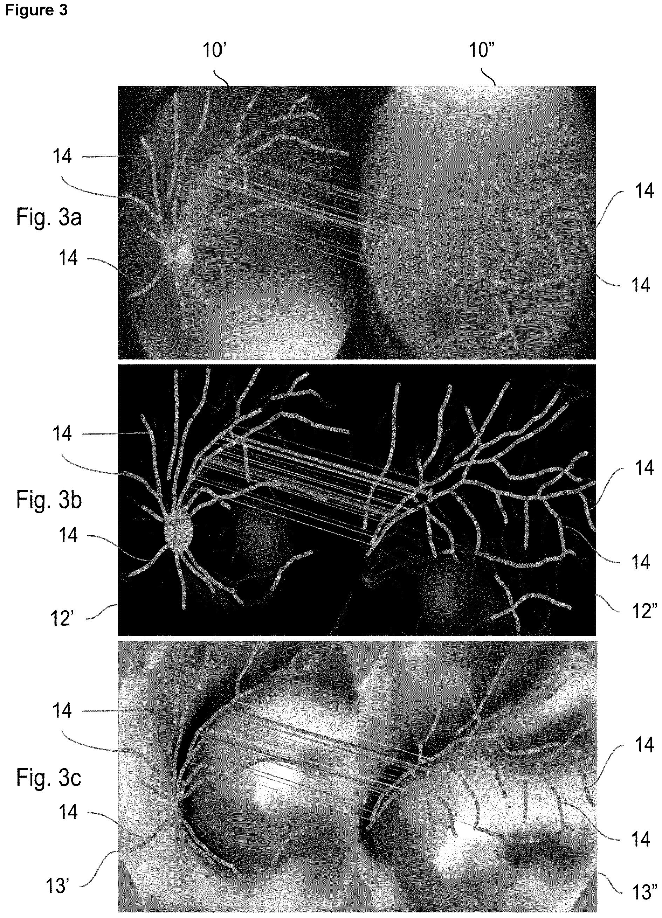

Fig. 3a to 3c show the determined keypoints 14 in two digital images 10', 10'' of a scene and their corresponding semantic feature maps.

The digital images 10', 10'' in fig. 3a show overlapping portions of a retina of an eye. Fig. 3b shows the segmentation channels 12', 12'' of the semantic feature maps corresponding to the digital images 10', 10''. Fig. 3c shows the implicit information 13', 13'' of the semantic feature maps corresponding to the digital images 10', 10''. The semantic feature maps are arranged below their corresponding digital images 10', 10''.

The segmentation channels of Fig. 3b show several keypoints 14 being arranged on blood vessels. The keypoints 14 are transferred to the implicit information 13', 13'' of the semantic feature map shown in fig. 3c and the digital images 10', 10'' shown in fig. 3a.

The lines in figs. 3a to 3c indicate valid keypoint matches for the registration, i.e., a line connects image points of the digital images 10', 10'' corresponding to the same spatial position in the scene.

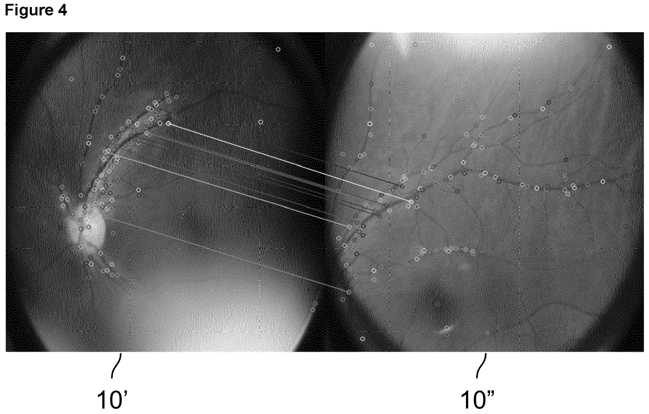

As comparison, fig. 4 shows a keypoint matching performed with a prior art method for feature extraction, i.e., scale-invariant feature transform, SIFT, for the same digital images 10', 10''. The number of lines, i.e., the matching of valid keypoints, is reduced in comparison to the number of lines of figs. 3a to 3c.

Particularly if the scene is a curved surface, e. g. the retina of an eye, in a further optional step 112, a set of transformation parameters 18 may be determined based on the registration.

In optional step 114, the digital images 10 and the semantic feature maps 12 may be transformed to a single coordinate space using the set of transformation parameters 18. The transformation may also be called warping. For example, the digital images 10 and the semantic feature maps 12 may be transformed on a coordinate space that fits to the curved surface of the retina of an eye.

The result of the transformation is a plurality of transformed registered digital images 20 and a plurality of transformed registered semantic feature maps 22.

If no transformation is required, the following steps are performed with the registered digital images 10 and the registered semantic feature maps 12.

In step 106, the plurality of registered digital images 20 are blended to a widefield image 24 based on the plurality of registered semantic feature maps 22. The blending may be performed in several iterative steps. In each step more registered digital images 22 are integrated in the resulting widefield image 24.

The registered digital images 20 are averaged for the blending using a weighted average with a linearly decreasing weight from a center of the registered digital image. Due to the weighted averaging visible edges on borders of the registered digital images 20 integrated in the widefield image 24 are reduced, preferably avoided.

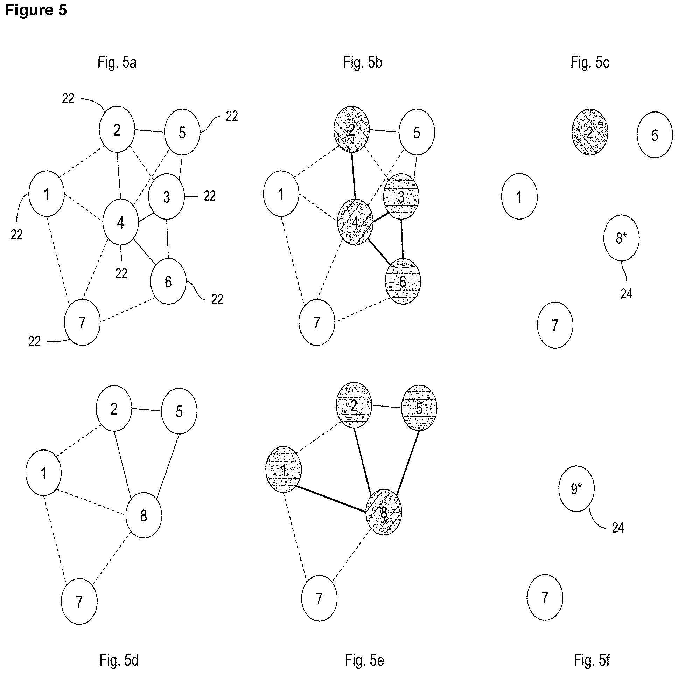

The blending process is explained with figs. 5a to 5f.

Fig. 5a shows several registered digital images 22 being represented by numbered circles. The dashed lines between the circles represent a pair of registered digital images in which keypoint matches failed. The solid lines represent a pair of registered digital images with valid matching keypoints.

Circle 4 comprises most keypoint matchings with other circles. Thus, the registered digital image 22 being represented by circle 4 is used as node for the current blending step. The node is marked with a hatching angled from down left to up right.

The keypoint matchings may be checked by an iterative closest point fine alignment step. If a keypoint matching passes the check, the corresponding registered digital image 22 is integrated into the node.

In fig. 5b, circle 2 does not pass the check. In the figure, it is marked with a hatching angled from up left to down right.

Circles 3 and 6 pass the check. In the figure, they are marked with horizontal hatchings. The registered digital images 22 represented by circles 3 and 6 are integrated into the registered digital image 22 of circle 4. This results in a new circle 8 that is marked with an asterisk in fig. 5c. Circle 8 represents a preliminary widefield image 24.

The next iteration step of the blending start in fig. 5d. Based on the keypoint matchings of the registered digital images 22 of circles 3, 4, and 6, the keypoints in the widefield image 24 of circle 8 can be analyzed whether they match with the further registered digital images 22 of circles 1, 2, 5, and 7. According to fig. 5d matchings are found between registered digital images of circles 1, 2, 5, and 8.

Since the preliminary widefield image 24 of circle 8 comprises most matchings, the preliminary widefield image 24 is the new node as shown in figure 5e. The keypoint matchings with the registered digital images 22 of circles 1, 2, and 5 pass the check.

Hence those registered digital images 22 are integrated into the preliminary widefield image 24 of circle 8. This results in a new widefield image 24 in circle 9, shown in fig. 5f.

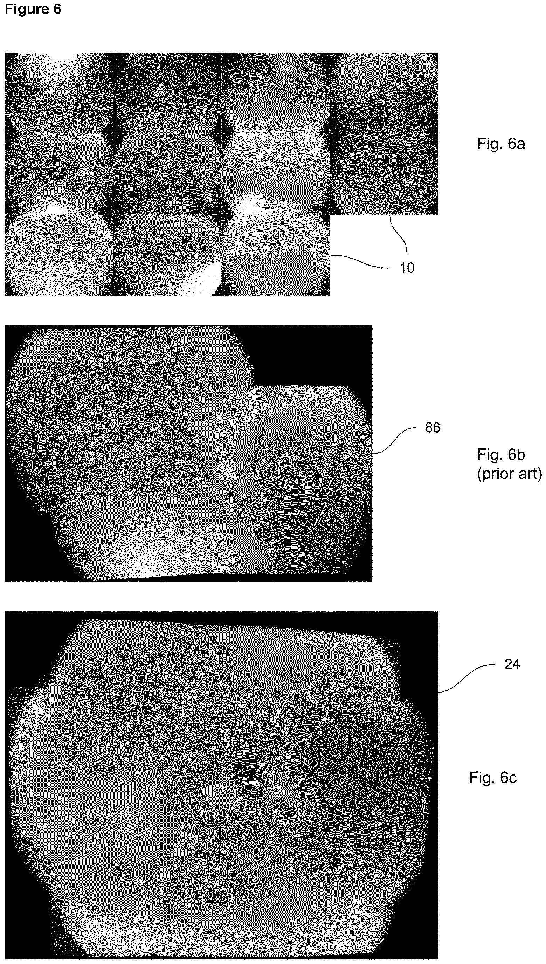

Figs. 6a to 6c show a comparison of the result of the blending step based on different feature extracting methods.

Fig. 6a shows a set of digital images 10 illustrating different portions of the retina of an eye. The digital images have different image qualities, e. g. inhomogeneous light exposure, artifacts etc.

Fig. 6b shows the resulting widefield image 86, wherein feature extraction was performed with SIFT.

Fig. 6c shows the resulting widefield image 24 resulting from the method 100 with semantic feature extraction. Furthermore, semantic feature information, i. e., blood vessels, the position of the macula and the optic nerve papilla, is overlayed on the widefield image 24.

The widefield image 24 comprises more digital images 10 of the set shown in fig. 6a than the widefield image 86 shown in fig. 6b. Furthermore, the widefield image 24 has less artifacts on the edges of the integrated digital images 10 than the widefield image 86.

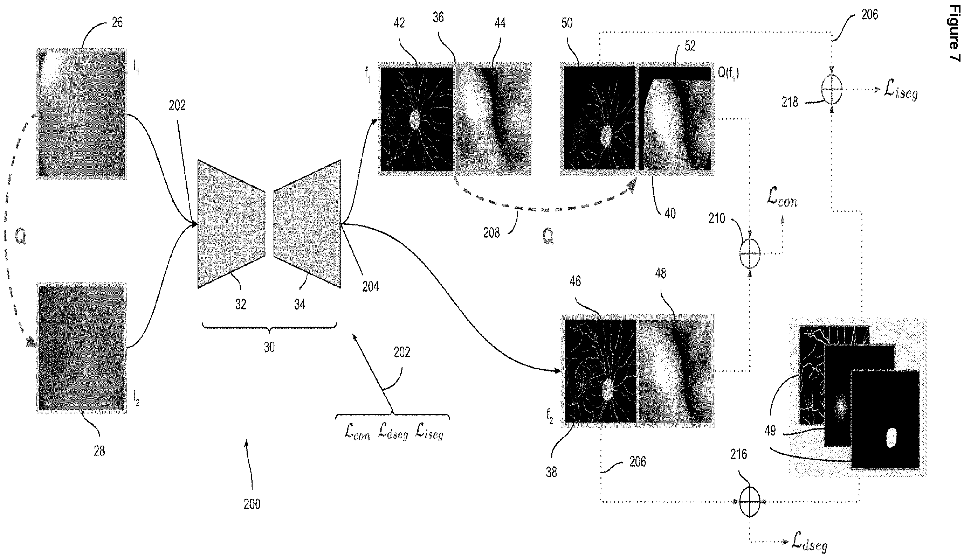

The FCN 30 being used in the method 100 may be trained with the computer-implemented method 200 for training at least one neural network shown in fig. 7.

In a first step 202 of method 200 at least one pair of digital training images 26, 28 is provided to the input layer of the FCN 30 to be trained.

At least two different exemplary methods may be applied for obtaining such a pair.

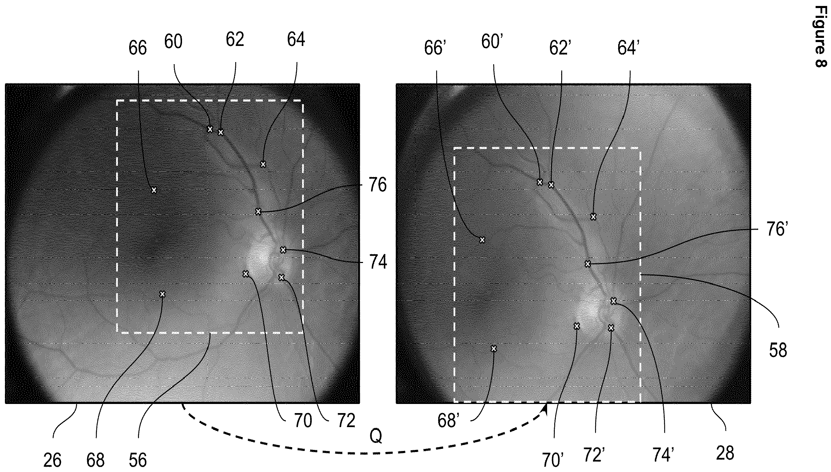

According to a first method, the two different digital images from the same training scene may be acquired as first digital training image 26 and second digital training image 28. Fig. 8 shows two overlapping digital images from a retina of an eye. Image points representing the same spatial position in the training scene in the two different digital images are identified, e. g. manually. For example, a quadratic transformation model may be applied to achieve an exact alignment taking into account the three dimensional shape of the training scene.

A ground truth transformation Q is determined based on those identified image points. The ground truth transformation Q maps image points from the first digital training image 26 to the second digital training image 28.

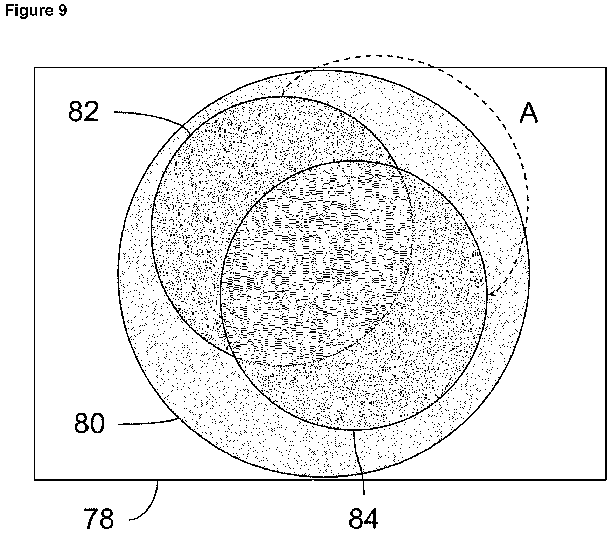

According to a second exemplary method, a training scene 80 may be chosen as shown in fig. 9. The training scene 78 shows an example of a scene for which the image stitching shall be applied. In the present example, the training scene 78 may illustrate the retina of an eye.

A foreground sector 80 is chosen, showing a portion of the training scene 78. For the acquisition of a first and second digital training image 26, 28, a first sector 82 and a second sector 84 of the foreground sector 80 are determined with two different affine transforms applied to the foreground sector 80. The two different affine transforms are chosen such that the first sector 82 and a second sector 84 overlap and are completely arranged in the foreground sector 80.

Digital training images 26, 28 may be determined from the first sector 82 and the second sector 84, respectively.

Furthermore, an alignment transformation is determined that aligns the first sector 82 to the second sector 84. The alignment transformation may be determined from the two different affine transforms.

In step 204, the output layer of the FCN 30 provides a first semantic feature map 36 for the first digital training image 26 and a second semantic feature map 38 for the second digital training image 28.

In this example, the semantic feature vectors of the semantic feature maps 36, 38 have a 1:1 correspondence to the image points of the first and second digital training images 26, 28.

The semantic feature vectors further comprise two sub-vectors in this example. The first sub-vector provides segmentation information, wherein the second sub-vector provides implicit information. The first sub-vectors of the semantic feature maps 36, 38 are visualized in sub-maps 42, 46. The second sub-vectors of the semantic feature maps 36, 38 are visualized in sub-maps 44, 48.

The first sub-maps 42, 46 illustrate blood vessels and a macula. The second sub-maps 44, 48 show colored areas as implicit information.

According to step 206, a segmentation loss is determined. The segmentation loss is determined by comparing the semantic feature map to a ground truth segmentation 49. It is evident, that only information channels of the semantic feature vector corresponding to the available ground truth segmentation may be analyzed to determine the segmentation loss.

Step 206 may comprise an optional sub-step 216. In sub-step 216, a direct segmentation loss is determined.

The direct segmentation loss $dseg_k$ is determined by comparing each segmentation channel of the first sub-maps 42, 46 to the corresponding channels of the corresponding ground truth segmentation 49 that may be provided by a manual analysis of the first and second digital training image 26, 28. The binary cross entropy of the ground truth segmentation 49 and the first sub-maps may be minimized:

$$dseg_k = -\sum_n^I y_n * log(f_n^k) + (1 - y_n) * log(1 - f_n^k)$$

where $f_n^k$ denotes the kth semantic feature channel of at an image point position $p_n$.

Step 206 may comprise a further optional sub-step 218. In sub-step 21, an indirect segmentation loss is determined.

For determining the indirect segmentation loss, the ground truth transformation Q is applied to the first semantic feature map 36 in step 208. Hence, the positions in the transformed first semantic feature map 40 match the positions in the second semantic feature map 38.

The indirect segmentation loss $iseg_k$ is determined by comparing each segmentation channel of the transformed first sub-map 50 to the corresponding channels of the corresponding ground truth segmentation 49 corresponding to the second semantic feature map 38. The binary cross entropy of the ground truth segmentation 49 and the first sub-map 50 may be minimized:

$$iseg_k = -\sum_n^I y_n * log\left(Q(f_n^k)\right) + (1 - y_n) * log\left(1 - Q(f_n^k)\right)$$

The total segmentation loss may then be

$$seg = dseg + iseg$$

In step 210, a contrastive image loss *con* is determined. The contrastive image loss *con* may be determined by comparing the transformed semantic feature map 40 with the second semantic feature map 38.

Particularly, the semantic feature vectors are optimized such that a distance between the semantic feature vectors for any two image points may be minimized if those two image points refer to the same spatial position of the training scene.

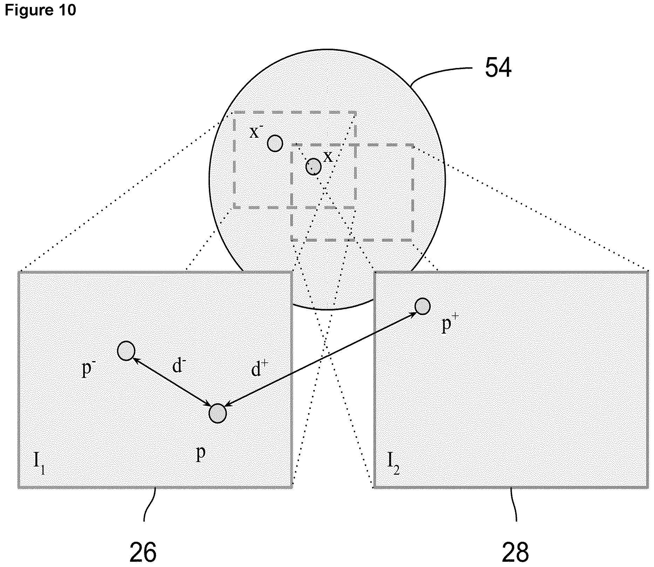

According to fig. 10, a section 54 of a training scene is shown. An image point at position p in the first digital training image 26 refers to spatial position x in the training scene. Image point at position $p^+$ in the second digital training image 28 also refers to that spatial position x.

Another image point $p^-$ of the first digital training image 26 refers to a different spatial position $x^-$ in the training scene. Positions p, $p^+$ and $p^-$ define a triplet. The distance $d^+$ between the positions p and $p^+$ shall be smaller than the distance $d^-$ between the position p and $p^-$. The distances may for example be Euclidian distances.

The semantic feature vector corresponding to position p is f. The semantic feature vector corresponding to position $p^+$ is $f^+$. The semantic feature vector corresponding to position $p^-$ is $f^-$. A triplet distance tl may for example be defined as

$$tl(f, f^+, f^-) = \max(0, \|f - f^+\|_2^2 - \|f - f^-\|_2^2 + \alpha)$$

The total contrastive image loss *con* is then the sum over all triplet distances:

$$con = \sum_i tl(f_i, f_i^+, f_i^-)$$

In step 212, the FCN 30 is adapted using an adaption parameter = $\lambda$ *seg*+ *con,* wherein $\lambda$ is a weighting factor for the adaption. The adaption of the FCN 30 changes the layers of the FCN 30 such that the output semantic feature maps better match the ground truth segmentation 49.

Steps 202 to 212 may be repeated until the segmentation loss and the contrastive image loss fulfill a predetermined condition. That predetermined condition may for example be maximum or minimum threshold value for the segmentation loss and the contrastive image loss.

The method 100 and/or the method 200 may be stored on a computer program product, e. g. a data carrier on which a computer program element is stored. The computer program product may comprise a computer program element that is adapted to carry out the method steps of the method 100 and/or the method 200.

Furthermore, a device like a personal computer or a smartphone may use the method 100 and/or the method 200. Using method 100 on a device may enable the device to perform image stitching with a set of acquired digital images.

According to the present invention, also a use of the computer-implemented method for image stitching a set of digital images described above is provided for diagnosing an eye illness, particularly an eye illness of the retina.

Specifically, said use for diagnosing an eye illness, particularly an eye illness of the retina comprises image stitching a set of digital images as described above and analyzing said stitched images whether or not they show abnormalities of the eye in comparison to a healthy eye, particularly abnormalities of the retina in comparison to the retina of a healthy eye, thereby diagnosing an eye illness, particularly an eye illness of the retina.

A "healthy eye" is an eye of a subject which is known not to suffer from an eye illness.

A "retina of a healthy eye" is a retina which is known not to suffer from an illness of the retina. If an eye or a retina shows an abnormality in comparison to a healthy eye or a healthy retina, such an abnormality may be indicative that said eye or retina suffers from an illness or may be at a risk of suffering from an illness, e.g. eye illness or illness of the retina.

It is apparent that the use for diagnosing an eye illness is carried out in vitro or ex vivo. Indeed, the diagnosis is carried out on digital images obtained from the eye(s) of a subject and stitched in accordance with the methods of the present invention.

As such, the diagnosis is non-invasive. Digital images are preferably processed, i.e., stitched in accordance with the methods of the present invention.

The subject may be a human, chimpanzee, dog, cat, cattle, swine, horse, sheep, goat, rat or mouse, with human being preferred.

The eye illness may preferably be an illness of the retina. An illness of the retina may be glaucoma, retinal tear, retinal detachment, retinal artery occlusion, diabetic retinopathy, epiretinal membrane, macular hole, macular pucker, macular degeneration, macular edema, uveitis, retinopathy, retinoblastoma, infectious retinitis or retinitis pigmentosa.

Diagnosis may be accomplished by analyzing digital images of an eye using the computer-implemented method for image stitching a set of digital images described above. For example, diagnosis may be carried out by comparing digital images of a healthy eye with digital images of an eye suspected to suffer or which is already suffering from an eye illness, preferably an illness of the retina. Such comparing may be aided by computers.

**Claims**

1. Computer-implemented method for training at least one neural network having an input layer (31) and an output layer (33) for obtaining a semantic feature map (12) at the output layer (33) for a digital image (10) provided at the input layer (31), the semantic feature map (12) comprising a semantic feature vector for each image point of the corresponding digital image (10) at the input layer (31), the semantic feature vector particularly providing likelihood information of the presence of a blood vessel, a macula and/or an optic nerve papilla at the corresponding image point, the method (200) comprising at least the following steps:

   - Providing (202) at least one pair of digital training images (26, 28) illustrating overlapping portions of a training scene at the input layer (31), wherein a ground truth transformation (Q) projects a first digital training image (26) of the pair of digital training images (26, 28) onto a second digital training image (28) of the pair of digital training images (26, 28), the training scene particularly illustrating a retina of an eye;
   - Obtaining (204) at least one semantic feature map (12) at the output layer (33) for each digital training image (26, 28) of the pair of digital training images (26, 28) at the input layer (31);
   - Determining (206) a segmentation loss between at least one semantic feature map (12) and at least one ground truth segmentation (49) of the training scene, the at least one ground truth segmentation (49) comprising semantic feature information of the training scene;
   - Transforming (208) at least one semantic feature map (12) corresponding to the first digital training image (26) of the at least one pair of digital training images (26, 28) using the ground truth transformation (Q);
   - Determining (210) a contrastive image loss between the transformed first semantic feature map (12) and the semantic feature map (12) corresponding to the second digital training image (28);
   - Adapting (212) the at least one neural network based on the determined segmentation loss and the contrastive image loss; and
   - Repeating above steps until the determined segmentation loss and the contrastive image loss fulfill a predetermined condition;

wherein the neural network is a fully convolutional neural network.

2. Computer-implemented method according to claim 1, wherein at least one semantic feature vector comprises a first sub-vector and a second sub-vector, the first sub-vector comprising at least one single-channel segmentation map, the at least one single-channel segmentation map indicating the likelihood of the presence of a semantic feature being provided in the at least one ground truth segmentation, the semantic feature particularly being at least one of the group: a blood vessel, a macula and/or an optic nerve papilla, wherein the second sub-vector comprises further implicit information for the corresponding image point, wherein in the step of determining a segmentation loss, the segmentation loss between the first sub-vector and the at least one ground truth segmentation is determined.

3. Computer-implemented method according to claim 1 or 2, wherein the step of determining a segmentation loss comprises the at least the following sub-steps:

- Determining (216) a direct segmentation loss between the at least one semantic feature map (12) and the at least one ground truth segmentation;
- Determining (218) an indirect segmentation loss between the at least one ground truth segmentation and at least one semantic feature map (12) corresponding to the first digital training image (26) of the at least one pair of digital training images (26, 28) by using the ground truth transformation (Q); and
- Determining (220) the segmentation loss from the direct segmentation loss and indirect segmentation loss.

4. Computer-implemented method according to claim 3, wherein in the step of determining (216) the segmentation loss from the direct segmentation loss and indirect segmentation loss, the direct segmentation loss and indirect segmentation loss are summed.

5. Computer-implemented method according to one of claims 1 to 4, wherein in the step of determining (210) a contrastive image loss, a distance, preferably a Euclidian distance, of at least the semantic feature vectors of the pair of digital training images (26, 28) is minimized, wherein said semantic feature vectors represent the same position in the training scene.

6. Computer-implemented method according to one of claims 1 to 5, wherein the neural network comprises an encoder (32) and a decoder (34), the encoder being configured to downscale a size of a digital image (10) at the input layer (31) to a downscaled digital image (10), wherein the decoder is configured to upscale the downscaled digital image (10) to a semantic feature map (12) having the size and to provide the semantic feature map (12) at the output layer (33).

7. Computer-implemented method for image stitching a set of digital images (10) illustrating overlapping portions of a scene into a widefield image of the scene using at least one neural network with an input layer (31) and an output layer (33), the scene in particular illustrating a retina of an eye, each digital image (10) comprising a plurality of image points, the method (100) for image stitching a set of digital images (10) comprising at least the following steps:

- Obtaining (102) at least one semantic feature map (12) (12) at the output layer (33) for at least one digital image (10) of the set (10) of digital images (10) at the input layer (31), the semantic feature map (12) comprising a semantic feature vector for at least one image point of the corresponding digital image (10) at the input layer (31), the semantic feature vector particularly providing likelihood information of the presence of a blood vessel, a macula and/or an optic nerve papilla at the corresponding image point;
- Registering (104) the digital images (10) of the set of digital images (10) using the obtained at least one semantic feature map (12);
- Blending (106) the plurality of registered digital images (20) of the set of digital images (10) into a widefield image of the scene,

wherein the neural network is a fully convolutional neural network and wherein at least one semantic feature vector encodes at least one semantic information and information about a spatial position in the scene.

8. Computer-implemented method according to claim 7, wherein the neural network was trained with a computer-implemented method according to one of claims 1 to 6.

9. Computer-implemented method according to claims 7 or 8, wherein between the steps of obtaining (102) at least one semantic feature map (12) and registering (104) the digital images (10) of the set of digital images (10), the method (100) further comprises the steps:

 - Determining (108) a set of keypoints (14) from the at least one semantic feature map (12); and
 - Determining (110) a descriptor vector (16) for at least one keypoint;

 wherein in the step of registering (104) the plurality of digital images (10), the keypoints and the descriptor vectors are used to identify image points in the different digital images (10) representing the same spatial position in the scene.

10. Computer-implemented method according to claim 9, wherein between the step of registering (104) the plurality of digital images (10) and blending (106) the plurality of registered digital images (10), the method further comprises the step:

 - Determining (112) a set of transformation parameters (18) from the keypoints and the descriptor vectors to align at least one digital image (10) into a single coordinate space; and
 - Transforming (114) the at least one digital image (10) and the corresponding at least one semantic feature map (12) with the set of transformation parameters;

 wherein the transformed digital images are the plurality of registered digital images (20).

11. Computer-implemented method according to one of claims 7 to 10, wherein in the step of blending (106) the plurality of registered digital images (20), the registered digital images (20) are merged using a weighted average of at least one registered digital image (20) with a linearly decreasing weight from a center of the at least one registered digital image (20) .

12. Method for diagnosing an eye illness, particularly an eye illness of the retina, using the computer-implemented method according to one of claims 7 to 11.

13. Use of the computer-implemented method according to one of claims 7 to 11 for diagnosing an eye illness, particularly an eye illness of the retina.

14. Computer program product being configured to carry out the computer-implemented method according to one of claims 1 to 6 and/or according to one of claims 7 to 12.

15. Device or system being configured to carry out the computer-implemented method according to one of claims 1 to 6 and/or according to one of claims 7 to 12.

**Figure 1**

**Figure 2**

**Figure 3**

Figure 4

10'                                    10"

**Figure 5**

Fig. 5a

Fig. 5b

Fig. 5c

Fig. 5d

Fig. 5e

Fig. 5f

**Figure 6**

Fig. 6a

10

86

Fig. 6b
(prior art)

24

Fig. 6c

**Figure 7**

**Figure 8**

Figure 9

**Figure 10**

Europäisches
Patentamt

European
Patent Office

Office européen
des brevets

**EUROPEAN SEARCH REPORT**

Application Number

EP 22 16 7734

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI TIANYU ET AL: "A SuperPoint-based Method for Automatic Stitching of Corneal Nerve Microscopy Images", PROCEEDINGS OF THE 41ST ACM SIGMOD-SIGACT-SIGAI SYMPOSIUM ON PRINCIPLES OF DATABASE SYSTEMS, ACMPUB27, NEW YORK, NY, USA, 18 March 2022 (2022-03-18), pages 664-669, XP058823129, DOI: 10.1145/3532213.3532314 ISBN: 978-1-4503-9578-6 | 1,5-10, 12-15 | INV. G06T7/33 |
| Y | * abstract * | 11 | |
| A | * sections 1, 2 * * figures 1, 4 * | 2-4 | |
| X | TRUONG PRUNE ET AL: "GLAMpoints: Greedily Learned Accurate Match Points", 2019 IEEE/CVF INTERNATIONAL CONFERENCE ON COMPUTER VISION (ICCV), IEEE, 27 October 2019 (2019-10-27), pages 10731-10740, XP033723546, DOI: 10.1109/ICCV.2019.01083 [retrieved on 2020-02-24] | 7,14,15 | |
| | | | TECHNICAL FIELDS SEARCHED (IPC) |
| | | | G06T |
| A | * abstract * * sections 1, 3 * * figures 1, 2, 6 * | 1 | |

-/--

The present search report has been drawn up for all claims

| Place of search | Date of completion of the search | Examiner |
|---|---|---|
| Munich | 27 September 2022 | Engels, Angela |

EPO FORM 1503 03.82 (P04C01)

page 1 of 3

Europäisches
Patentamt

European
Patent Office

Office européen
des brevets

**EUROPEAN SEARCH REPORT**

Application Number

EP 22 16 7734

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ABANOVIE ELDAR ET AL: "Deep Neural Network-based Feature Descriptor for Retinal Image Registration", 2018 IEEE 6TH WORKSHOP ON ADVANCES IN INFORMATION, ELECTRONIC AND ELECTRICAL ENGINEERING (AIEEE), IEEE, 8 November 2018 (2018-11-08), pages 1-4, XP033485134, DOI: 10.1109/AIEEE.2018.8592033 [retrieved on 2018-12-27] * abstract * * sections I, II.B * * figure 2 * | 1,7,14, 15 | |
| X | WANG YIQIAN ET AL: "Robust Content-Adaptive Global Registration for Multimodal Retinal Images Using Weakly Supervised Deep-Learning Framework", IEEE TRANSACTIONS ON IMAGE PROCESSING, IEEE, USA, vol. 30, 18 February 2021 (2021-02-18), pages 3167-3178, XP011840629, ISSN: 1057-7149, DOI: 10.1109/TIP.2021.3058570 [retrieved on 2021-02-24] * abstract * * section III * * figure 1 * | 1,7,14, 15 | |
| | ----- | | |
| | -/-- | | TECHNICAL FIELDS SEARCHED (IPC) |

The present search report has been drawn up for all claims

| Place of search | Date of completion of the search | Examiner |
|---|---|---|
| Munich | 27 September 2022 | Engels, Angela |

EPO FORM 1503 03.82 (P04C01)

Europäisches
Patentamt

European
Patent Office

Office européen
des brevets

## EUROPEAN SEARCH REPORT

Application Number

EP 22 16 7734

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DANIEL DETONE ET AL: "SuperPoint: Self-Supervised Interest Point Detection and Description", ARXIV.ORG, CORNELL UNIVERSITY LIBRARY, 201 OLIN LIBRARY CORNELL UNIVERSITY ITHACA, NY 14853, 20 December 2017 (2017-12-20), XP081314340, | 1,5-10, 12-15 | |
| Y | * abstract * | 11 | |
| A | * section 3, introductory paragraph * * sections 3.4, 6 * * figures 1, 2(c), 3 * ----- | 2-4 | |
| Y | GHOSH DEBABRATA ET AL: "A survey on image mosaicing techniques", JOURNAL OF VISUAL COMMUNICATION AND IMAGE REPRESENTATION, ACADEMIC PRESS, INC, US, vol. 34, 30 October 2015 (2015-10-30), pages 1-11, XP029359757, ISSN: 1047-3203, DOI: 10.1016/J.JVCIR.2015.10.014 * section 4.1.1 * ----- | 11 | |

**TECHNICAL FIELDS SEARCHED (IPC)**

The present search report has been drawn up for all claims

| Place of search | Date of completion of the search | Examiner |
|---|---|---|
| Munich | 27 September 2022 | Engels, Angela |

EPO FORM 1503 03.82 (P04C01)